# EUROPEAN PATENT SPECIFICATION

(11) **EP 1 145 893 B1**
(45) Date of publication and mention of the grant of the patent: **15.12.2004**
(21) Application number: 00962978.3
(22) Date of filing: 02.10.2000
(51) Int. Cl.: B60K 6/04, B60K 17/04, B60K 17/10, B60K 17/12

(54) **HYBRID VEHICLE DRIVING DEVICE**
ANTRIEBSVORRICHTUNG FÜR HYBRIDFAHRZEUG
VEHICULE HYBRIDE UTILISANT UN DISPOSITIF D'ENTRAINEMENT

(30) Priority: 01.10.1999 JP 28217799; 15.06.2000 JP 2000179885; 26.09.2000 JP 2000292978
(43) Date of publication of application: 17.10.2001
(73) Proprietor: AISIN AW CO., LTD., Anjo-shi Aichi 444-1192 (JP)
(72) Inventor: TSUDUKI, Shigeo, Aisin Aw Co., Ltd., Anjo-shi, Aichi 444-1192 (JP); INUDUKA, Takeshi, Aisin Aw Co., Ltd., Anjo-shi, Aichi 444-1192 (JP); WAKUTA, Satoru, Aisin Aw Co., Ltd., Anjo-shi, Aichi 444-1192 (JP); KIDO, Takahiro, Aisin Aw Co., Ltd., Anjo-shi, Aichi 444-1192 (JP); TANIGUCHI, Takao, Aisin Aw Co., Ltd., Anjo-shi, Aichi 444-1192 (JP); TSUKAMOTO, Kazumasa, Aisin Aw Co., Ltd., Anjo-shi, Aichi 444-1192 (JP); OMOTE, Kenji, Aisin Aw Co., Ltd., Anjo-shi, Aichi 444-1192 (JP)
(74) Representative: VOSSIUS & PARTNER
(86) International application number: PCT/JP2000/006766
(87) International publication number: WO 2001/025043

(56) References cited:
- EP-A- 0 913 601
- DE-A- 4 007 424
- DE-A- 19 747 963
- JP-A- 8 318 746
- JP-A- 8 318 747
- US-A- 5 482 512
- US-A- 5 789 823

## Description

### TECHNICAL FIELD

The present invention relates to a drive apparatus in a hybrid vehicle of a parallel type in which an engine and a motor are connected for being used as a power source, and more particularly to a drive apparatus for a hybrid vehicle in which a motor is additionally provided in an automatic transmission.

### BACKGROUND ART

Conventionally, there has been proposed a drive apparatus for a parallel hybrid vehicle structured such that both of an engine and a motor generator are additionally provided in an automatic transmission so as to transmit driving forces of both of the engine and the motor generator to the automatic transmission at a time of starting, accelerating or the like, make the motor generator function as a generator at a time of traveling downhill or braking, thereby supplementing engine brake effect, and regenerate a braking energy thereby improving fuel economy and reducing a discharge amount of exhaust gas.

Among the drive apparatuses of this kind, for example, as disclosed in U.S. Patent No. 5,789,823, there is a structure in which a motor generator is arranged in an outer side in a diametrical direction of a torque converter and a rotor of a motor generator is integrally fixed to a small diameter portion formed in the torque converter.

However, in the structure mentioned above, since the rotor is adhered to the outer side in the diametrical direction of the torque converter, a position of the rotor is changed at a time when the torque converter is deformed by a centrifugal hydraulic pressure, a charge or the like, so that there is a risk that the rotor is interfered with a stator due to a diametrical movement. Accordingly, in order to prevent the interference between the stator and the rotor, it is necessary to determine an interval between the rotor and the stator in expectation of the deformation of the torque converter. However, when the interval between the stator and the rotor is increased, efficiency of the motor is reduced. Further, axial positions of the stator and the rotor are shifted due to an axial movement, whereby efficiency of the motor is reduced. Further, since the torque converter generates a lot of heat, when the torque converter and the rotor are integrally constituted, heat is transmitted from the torque converter resulting in demagnetizing. Further, if a lockup clutch and the rotor are arranged close to each other, dusts such as iron powders or the like are stored in the lockup clutch due to a magnetic flux output from the magnet, thereby preventing the lockup clutch from operating.

Accordingly, an object of the present invention is to provide a drive apparatus for a hybrid vehicle which does not reduce an efficiency of a motor while reducing an axial dimension of the drive apparatus.

EP-A-0 913 601 discloses a drive connection which is provided for torque transfer in the drive train of a motor vehicle for realizable connection of a crank shaft with a pump wheel of a coaxially mounted hydrodynamic torque converter in which the pump wheel is mounted so that it is rotatably supported integrally with a housing by a radial bearing.

DE-A-197 47 963 discloses a driving connection according to the preamble of claim 1, which is provided for torque transmission in the drive train of a motor vehicle for releasable connection of the crank shaft with a coaxial hydrodynamic torque converter. A torsional vibration damper located outside the torque converter is interposed between the crank shaft and the torque converter. The connection between the torque converter and the torsional vibration damper is a shaft-hub connection provided with lengthwise teeth.

### DISCLOSURE OF THE INVENTION

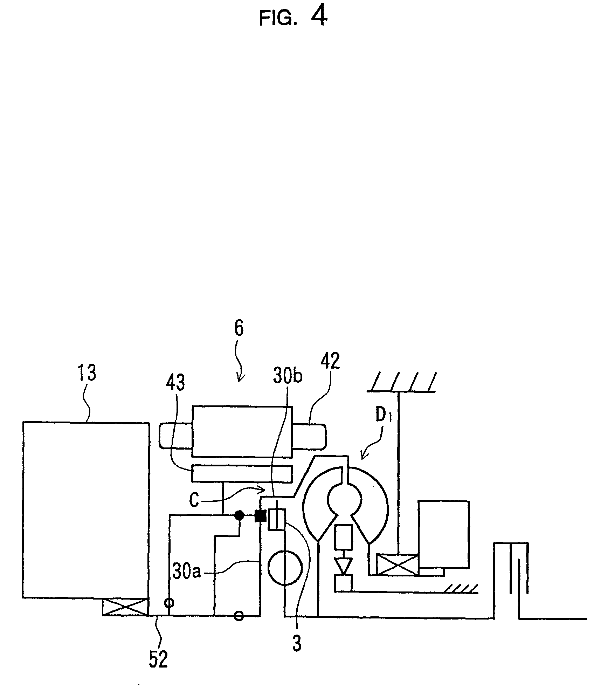

According to the present invention, as shown in Figs. 4 to 8, there is provided a drive apparatus for a hybrid vehicle comprising: an engine; a motor constituted by a stator and a rotor; an automatic transmission having a fluid transmitting apparatus; a case for receiving the motor; and a driving force output from the engine and the motor being transmitted to an input member of the fluid transmitting apparatus,
characterized in that the motor is arranged in a side of an outer diameter of the fluid transmitting apparatus at a position at which at least a part of the motor is overlapped with the fluid transmitting apparatus in an axial direction, with a predetermined gap between the rotor and the fluid transmitting apparatus, and the rotor is supported by one of the fluid transmitting apparatus and an output shaft of the engine or a combination of any two among the fluid transmitting apparatus, the case and the output shaft of the engine.

Accordingly, since the motor is arranged at a position at which at least a part of the motor is overlapped with the fluid transmitting apparatus in the axial direction, the axial dimension of the drive apparatus is reduced. Further, since the motor is arranged in the side of the outer diameter of the fluid transmitting apparatus, with the predetermined gap between the rotor and the fluid transmitting apparatus, the position of the rotor does not move even when the fluid transmitting apparatus is deformed by the centrifugal hydraulic pressure, the charge or the like. Accordingly, there is not generated a disadvantage that the rotor is moved in the diametrical direction so as to be interfered with the stator. Further, since the interference between the rotor and the stator is not generated, it is not necessary to secure the gap between the stator and the rotor to be a little large, so that efficiency of the motor is not reduced. Further, the heat output from the fluid transmitting apparatus is not easily transmitted and the magnet is not degaussed.

According to the present invention, as shown in Fig. 4, the drive apparatus is characterized in that the rotor is supported by the output shaft of the engine and an input member of the fluid transmitting apparatus.

Accordingly, since the rotor is supported by the output shaft of the engine and the input member of the fluid transmitting apparatus, the position of the rotor is not easily shifted, and it is easy to accurately set the gap between the rotor and the fluid transmitting apparatus.

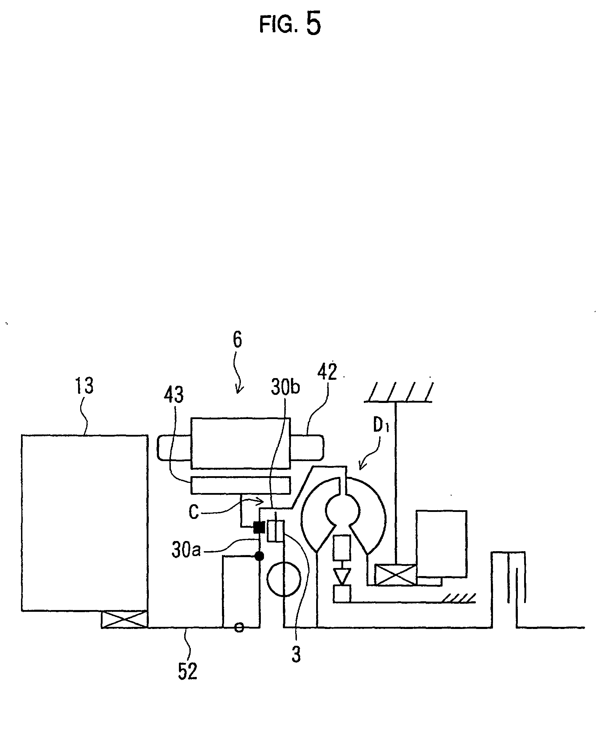

According to the present invention, as shown in Fig. 5, the drive apparatus is characterized in that the rotor is fixed to and supported by the input member of the fluid transmitting apparatus.

Accordingly, since the rotor is fixed to and supported by the input member of the fluid transmitting apparatus, it is easy to accurately set the gap between the rotor and the fluid transmitting apparatus.

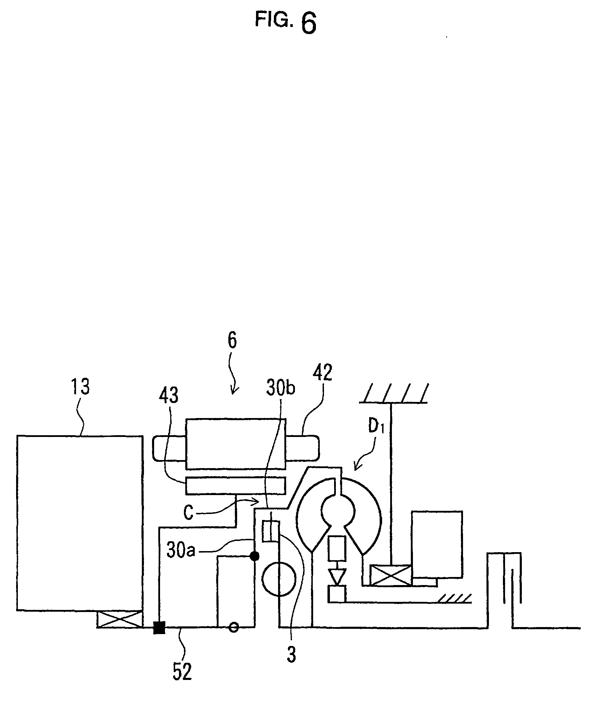

According to the present invention, as shown in Fig. 6, the drive apparatus is characterized in that the rotor is fixed to and supported by the output shaft of the engine.

Accordingly, since the rotor is fixed to and supported by the output shaft of the engine, the rotor does not move in the axial direction even when the fluid transmitting apparatus is deformed by the centrifugal hydraulic pressure or the like.

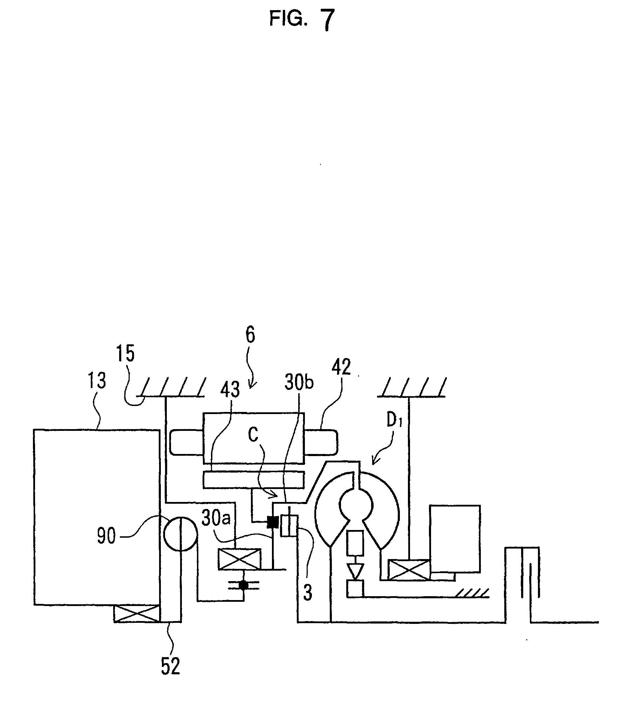

According to the present invention, as shown in Fig. 7, the drive apparatus is characterized in that the rotor is supported by the case and the input member of the fluid transmitting apparatus.

Accordingly, since the rotor is supported by the case and the input member of the fluid transmitting apparatus, it is possible to more reliably prevent the rotor from being shifted from the stator.

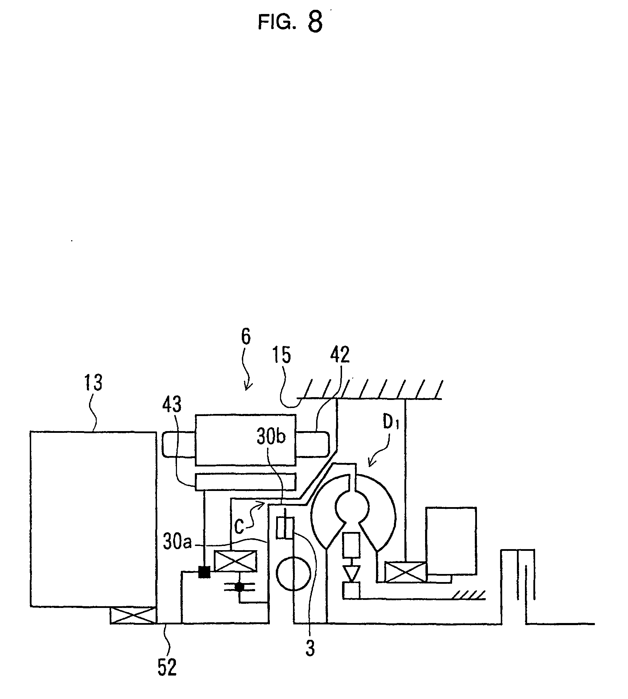

According to the present invention, as shown in Fig. 8, the drive apparatus is characterized in that the rotor is supported by the case and the output shaft of the engine.

Accordingly, since the rotor is supported by the case and the output shaft of the engine, it is possible to reliably prevent the rotor from being shifted from the stator in both of the axial direction and the diametrical direction.

According to the present invention, the drive apparatus is characterized in that the rotor has a shaft portion at a center of rotation thereof, and the shaft portion of the rotor is in contact with an output shaft of the engine in an axially narrow area, thereby being supported by the output shaft in such a manner as to freely move relatively.

Accordingly, since the shaft portion of the rotor is in contact with the output shaft of the engine in the axially narrow area, thereby being supported by the output shaft in such a manner as to freely move relatively. Therefore, it is possible to reduce a transmission of an explosive vibration of the engine to the rotor, thereby making the gap between the rotor and the stator small and increasing efficiency of the motor.

According to the present invention, the drive apparatus is characterized in that a concave portion is formed on an end surface of the output shaft of the engine, and in an axially narrow area formed is an annular protruding groove portion is formed, and a shaft portion of the rotor is inserted to the concave portion and the protruding groove portion is in contact with the output shaft, thereby being supported by the output shaft.

Accordingly, the concave portion is formed on the end surface of the output shaft of the engine, the annular protruding groove portion is formed in the axially narrow area, and the shaft portion of the rotor is inserted to the concave portion and the protruding groove portion is in contact with the output shaft, thereby being supported by the output shaft. Therefore, it is possible to reduce a transmission of an explosive vibration of the engine to the rotor, thereby increasing efficiency of the motor.

According to the present invention, the drive apparatus is characterized in that the fluid transmitting apparatus has a front cover covering a turbine runner and serving as the input member connected to a pump impeller, and the rotor is supported in a portion opposing the rotor in the front cover and in a side of an outer diameter of the cover.

Accordingly, the rotor is supported in the portion opposing the rotor in the front cover and in the side of the outer diameter of the cover, however, a degree of deformation of the cover due to hydraulic pressure is smaller in the side of the outer diameter than in a center portion of rotation (in a side of inner diameter), so that even in the case that the cover is deformed by hydraulic pressure, it is possible to prevent a centering accuracy of the rotor from being deteriorated.

According to the present invention, the drive apparatus is characterized in that the fluid transmitting apparatus has a center piece at a center of rotation thereof and the rotor is centered by the center piece.

Accordingly, it is possible to increase a centering accuracy of the rotor.

According to the present invention, the drive apparatus is characterized by providing a flex plate for transmitting a driving force between the output shaft of the engine and the rotor, a part of the flex plate is extended out to a side of an outer diameter of the stator in the motor, and a sensor for detecting a phase of the rotor in the motor is arranged in the side of the outer diameter of the motor so as to detect the extended portion of the flex plate.

Accordingly, since the sensor for detecting the phase of the rotor in the motor is arranged in the side of the outer diameter of the motor so as to detect the extended portion of the flex plate, it is sufficient to directly support the sensor by a front end portion of a fixing member such as a motor housing or the like, whereby it is possible to reduce an axial dimension of the apparatus. Further, since the phase of the rotor in the motor is detected by using the flex plate, it is possible to detect the phase without the necessity that a new member for being detected is provided.

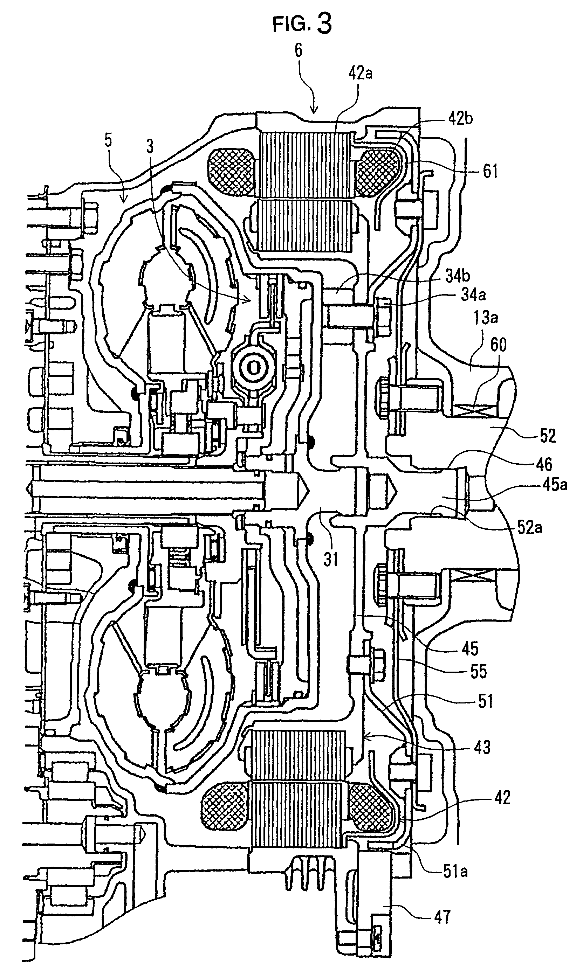

According to the present invention (for example, refer to Fig. 3), the drive apparatus is characterized in that an end portion of an output shaft in the engine is rotatably supported by a bearing portion, a concave portion is formed on an end surface of the output shaft, the rotor has a shaft portion in a center of rotation thereof, the shaft portion is inserted to the concave portion so as to be supported to the output shaft, and a portion to which the shaft portion of the rotor is supported is arranged so that at least a part of the portion is overlapped in an axial direction with the bearing portion.

Accordingly, since the engine output shaft is supported in the bearing portion so that the rotor is overlapped with the portion supported to the engine output shaft, a force applied to the engine output shaft by supporting the rotor can be directly received by the bearing portion supporting the engine output shaft, and it is possible to reduce an influence of the rotor on the engine output shaft, and further, since the portion supporting the rotor in the engine output shaft has less vibration due to the support by the bearing portion even in an eccentric rotation of the engine output shaft caused by the explosive vibration of the engine, the eccentric rotation gives less influence to the rotor and it is possible to support the rotor with a high accuracy.

According to the present invention, the drive apparatus is characterized in that the engine output shaft and the input member of the fluid transmitting apparatus are supported so as to freely move relatively and connected so as to freely move in an axial direction.

Accordingly, since the engine output shaft and the input member of the fluid transmitting apparatus are supported so as to freely move relatively and connected so as to freely move in an axial direction, the rotor side is not affected by the deformation of the fluid transmitting apparatus due to the centrifugal hydraulic pressure or the like.

According to the present invention, the drive apparatus is characterized in that the rotor and the input member of the fluid transmitting apparatus are integrally fixed so as to be rotatably supported to the case and connected to the output shaft of the engine so as to freely move in the axial direction.

Accordingly, since the rotor and the input member of the fluid transmitting apparatus are integrally fixed so as to be rotatably supported to the case and connected to the output shaft of the engine so as to freely move in the axial direction, it is possible to prevent the rotor from being shifted from the stator.

According to the present invention, the drive apparatus is characterized in that the rotor and the output shaft of the engine are integrally fixed so as to be rotatably supported to the case and connected to the input member of the fluid transmitting apparatus so as to freely move in an axial direction with each other.

Accordingly, since the rotor and the output shaft of the engine are integrally fixed so as to be rotatably supported to the case and connected to the input member of the fluid transmitting apparatus so as to freely move in an axial direction with each other, it is possible to prevent the rotor from being shifted from the stator.

According to the present invention, the drive apparatus is characterized in that the fluid transmitting apparatus has a front cover covering a turbine runner and serving as the input member connected to a pump impeller, the front cover has a flat portion extending in an axial direction and the rotor is arranged in a side of an outer side of the flat portion with the predetermined gap.

Accordingly, since the front cover has the flat portion extending in the axial direction and the rotor is arranged in a side of an outer side of the flat portion with the predetermined gap, an axial length of a whole of the drive apparatus can be reduced.

According to the present invention, the drive apparatus is characterized in that the predetermined gap is within a range between 0.8 and 3.5 mm.

Accordingly, since the predetermined gap is within the range between 0.8 and 3.5 mm, it is possible to prevent the dusts such as the iron powders from being stored in a position close to the rotor within the fluid transmitting apparatus due to the magnetic flux output from the magnet of the rotor.

According to the present invention, the drive apparatus is characterized in that the fluid transmission apparatus is constituted by a multi-disc clutch and has a lockup clutch for connecting the input member to the turbine, and the lockup clutch is arranged in a side of an inner diameter of the flat portion in the front cover.

Accordingly, the lockup clutch is arranged in the side of the inner diameter of the flat portion in the front cover, however, on the sake of the predetermined gap, it is possible to prevent the dusts such as the iron powders from being stored in the lockup clutch due to the magnetic flux output from the magnet of the rotor.

In the present invention, the motor is not limited to a so-called narrow-defined motor for converting electric energy into rotational motion, but includes a so-called generator for converting rotational motion into electric energy, the engine means a structure for converting an energy obtained by burning a fuel into the rotational motion and includes a gasoline engine, a diesel engine and the like, and the bearing portion is not limited to a ball bearing such as a roller bearing and the like, and includes all the shaft support portion, for example, a slide bearing such as a metal bearing, a journal bearing, a static pressure bearing and the like, an oil retaining bearing, a gas bearing and the like.

### BRIEF DESCRIPTION OF THE DRAWINGS

Fig. 1 is a cross sectional view showing an embodiment of a structure of a drive apparatus for a hybrid vehicle in accordance with the present invention;
Fig. 2 is a cross sectional view showing a torque converter and a motor generator portion corresponding to a primary portion thereof;
Fig. 3 is a cross sectional view showing a motor generator portion in accordance with a partly modified embodiment;
Fig. 4 is a skeleton view showing a variation of a support aspect of a rotor;
Fig. 5 is a skeleton view showing a variation of a support aspect of a rotor;
Fig. 6 is a skeleton view showing a variation of a support aspect of a rotor;
Fig. 7 is a skeleton view showing a variation of a support aspect of a rotor;
Fig. 8 is a skeleton view showing a variation of a support aspect of a rotor; and
Fig. 9 is a schematic view explaining definitions of reference symbols used in Figs. 4 to 8.

### BEST MODE FOR CARRYING OUT THE INVENTION

A description will be given below of an embodiment in accordance with the present invention with reference to the accompanying drawings.

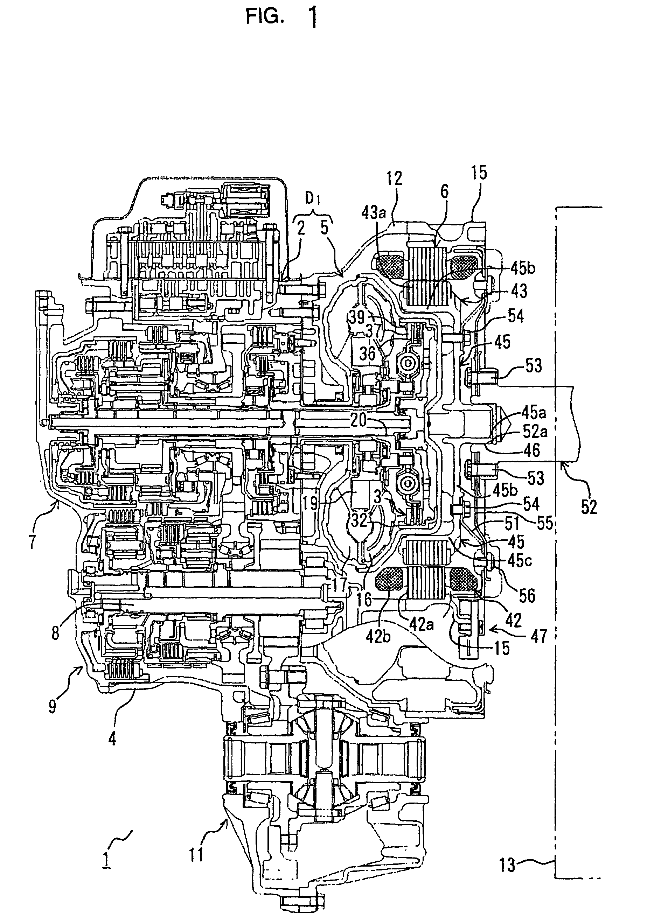

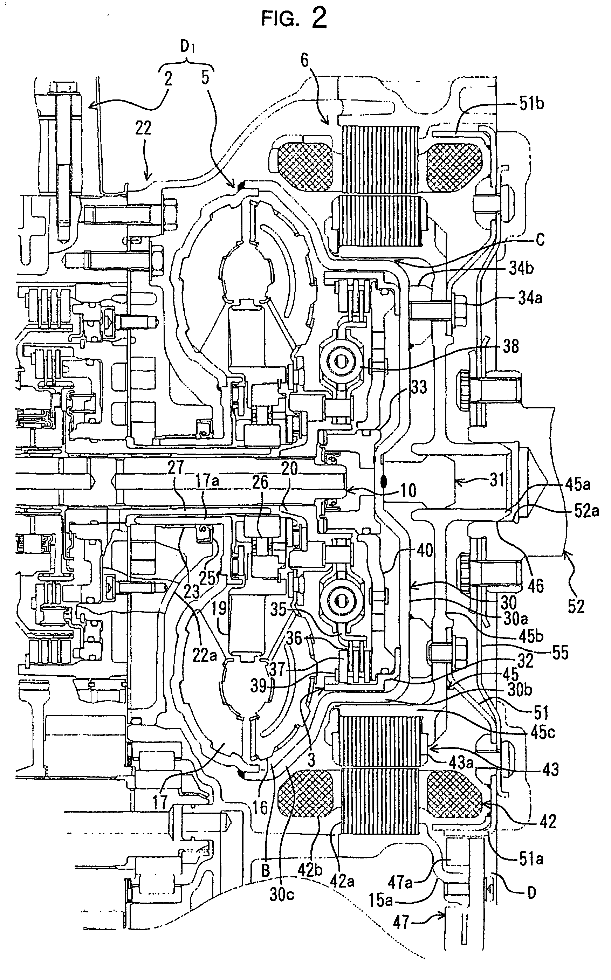

Fig. 1 is a cross sectional view showing an embodiment of a structure of a drive apparatus for a hybrid vehicle in accordance with the present invention, and Fig. 2 is a view showing a primary portion of the drive apparatus for a hybrid vehicle.

A drive apparatus 1 for a hybrid vehicle shown in the drawings is structured such that a motor generator 6 is additionally provided in a torque converter portion of a conventional automatic transmission A/T, and is provided with an internal combustion engine 13 such as a gasoline engine or the like, a motor generator (a motor) 6 constituted by a brushless DC motor or the like housed in a motor housing 15, and an automatic transmission D₁ to which a driving force output from the engine 13 and the motor generator 6 is transmitted. That is, the drive apparatus I for a hybrid vehicle according to the invention is structured such that the motor generator 6 and the automatic transmission D₁ are sequentially arranged from a side of the engine.

In this case, a crank shaft (an output shaft) 52 is extended from the internal combustion engine 13 to the motor generator 6, and a flexible drive plate 55 is fixed to a front end portion of the crank shaft 52 by a bolt 53. Further, a flexible input plate 51 is arranged at a position opposing this drive plate 55 in a state that front end portions thereof are fixed and connected to each other by a bolt 56, and a flex plate is constructed by these plates 51 and 55. In this case, a hole portion (a concave portion) 52a is pierced on an end surface of the crank shaft 52 of the internal combustion engine 13 (details will be described later).

On the contrary, the motor generator 6 has a stator 42 and a rotor 43. Among them, the rotor 43 is constituted by a lot of laminated plates 43a to which permanent magnets are inserted, and a support plate 45 for fixing and supporting these laminated plates 43a. The support plate 45 is constituted by a cylindrical shaft portion 45a arranged at a center of the rotation thereof, a disc portion 45b connected to the shaft portion 45a and arranged along the drive plate 55 and a cylindrical holding portion 45c connected to an outer edge portion of the disc portion 45b, and the laminated plates 43a mentioned above are held in the holding portion 45c in a state of being arranged in an axial direction. Further, as in detail shown in Fig. 2, an annular protruding groove portion 46 is formed in an axially narrow area on an outer peripheral surface of a front end portion in the shaft portion 45a (that is, a band-like area on the outer peripheral surface of the shaft portion 45a and having a narrow width in the axial direction). The shaft portion 45a is inserted to the hole portion 52a of the crank shaft 52 and the protruding groove portion 46 is in contact with an inner surface of the hole portion in the crank shaft 52, whereby the shaft portion 45a is supported by the crank shaft 52 in such a manner as to freely move relatively.
Accordingly, it is possible to center the shaft portion 45a by suitably positioning the housing.

In this case, in Figs. 1 and 2, the hole portion 52a is formed in the side of the crank shaft 52 and the shaft portion 45a of the rotor is inserted to the hole portion 52a, however, the structure is not, of course limited to this, as far as the shaft portion 45a is in contact with the crank shaft 52 of the engine in the axially narrow area, whereby the shaft portion 45a is supported by the crank shaft 52 in such a manner as to freely move relatively, the structure may be made such that the hole portion is formed in the side of the shaft portion 45a of the rotor and the crank shaft 52 is inserted to the hole portion.

On the contrary, the structure is made such that an inner edge portion of the input plate 51 mentioned above is fixed to the disc portion 45b by a bolt 54, and the flex plate constituted by the input plate 51 and the drive plate 55 is arranged between the crank shaft 52 of the internal combustion engine and the rotor 43 so as to transmit driving force.

A lot of iron cores 42a are fixed to the motor housing 15 so as to oppose the laminated plates 43a with a little gap, and a coil 42b is wound around the iron cores 42a, whereby the stator 42 is constructed. In this case, the stator 42 is set to be as great as possible within a range of keeping a minimum ground height of the vehicle, and a predetermined output is secured for a multi-polarization. Further, the laminated plates 43a of the rotor 43 has a strength at a degree capable of sufficiently resisting a centrifugal force.

In this case, a part of the flex plate mentioned above is extended out to a side of an outer diameter of the stator 42 in the motor generator 6. A sensor 47 is arranged at a position axially overlapping with the motor generator 6 (that is, a position opposing the flex plate) in the side of the outer diameter of the motor generator 6, and the extended portion of the flex plate is detected by the sensor 47, whereby a phase of the rotor 43 in the motor generator 6 is detected. The sensor 47 is arranged at a front end (an engine side) of the motor housing 15 so as to be directed in an outer diameter side, and a detecting portion 47a thereof is arranged in a concave portion D formed by an outer diameter protruding portion 15a of the motor housing 15. On the contrary, the input plate (the flex plate) 51 integrally connected to the rotor disc portion 45b extends out in the outer diameter direction, is bent in such a manner as to cover one outer diameter side of the stator coil 42b by a front end thereof, and constructs a portion to be detected by the detecting portion 47a, together with a plate 51b integrally welded in the outer diameter portion. The detecting portion 47a is provided for accurately detecting a rotational position of the rotor 43 so as to control a timing of an electric current to be flowed to the stator 42. As well as it is possible to detect the rotational position of the rotor 43 by the sensor 47 so as to secure a performance of the motor generator 6 and it is possible to reliably prevent a reverse rotation at a time of starting, no particular axial space is required for placing the sensor 47 and it is possible to prevent a total length from being increased.

On the contrary, the automatic transmission D₁ mentioned above is constituted by a torque converter (a fluid transmitting apparatus) 5 and a multi-stage speed change mechanism 2. Among them, the multi-stage speed change mechanism 2 is constituted by a main speed change mechanism portion 7 housed in a mission case 4 and coaxially arranged with an input shaft 10, a sub speed change mechanism portion 9 coaxially arranged with a counter shaft 8 parallel to the input shaft, and a differential apparatus 11 coaxially arranged with a front wheel drive shaft, and is of a front engine and front drive type (FF type) in which the above elements are housed in an integral case capable of being separated. Further, the torque converter 5 is, as in detail shown in Fig. 2, housed in a converter housing 12 and has a lockup clutch 3, a turbine runner 16, a pump impeller 17, a stator 19 and a front cover (an input member of a transmission) 30 arranged so as to cover them, a center piece 31 is fixed to an outer side in a center portion of rotation in the cover 30 and a lockup piston hub 33 is fixed to an inner side thereof.

Among them, the front cover 30 is constituted by a disc-shaped inner diameter portion 30a arranged to be along the disc portion 45b of the rotor 43, a cylinder-shaped middle portion 30b connected to an outer edge portion of the inner diameter portion 30a and arranged to be along the holding portion 45c, and an outer diameter portion 30c connected to the middle portion 30b, formed so as to be along an outer shape of the turbine runner 16 and fixed to the pump impeller 17. In this case, the stator 42 and the rotor 43 mentioned above are respectively arranged at positions aligned in the side of the outer diameter of the middle portion 30b in the front cover 30. Further, a predetermined gap C exists between the middle portion 30b and the holding portion 45c.

Further, the center piece 31 is inserted to the shaft portion 45a of the rotor 43 in such a manner as to freely move relatively in the axial direction, thereby centering the rotor 43 with respect to the torque converter 5. The torque converter 5 is structured such that an outer shell thereof (the front cover 30 or the like) is deformed by a change of a centrifugal hydraulic pressure and a charge pressure, particularly, an amount of deformation is greater in an axial deformation at the center portion of rotation, and accordingly, the center piece 31 moves in the axial direction, however, since the center piece 31 and the rotor shaft portion 45a are supported so as to freely move relatively as mentioned above, a support accuracy of the rotor 43 is not affected by the axial movement of the center piece 31.

Further, the rotor 43 is fixed to the inner diameter portion 30a of the front cover 30. That is, the disc portion 45b of the rotor 43 is fixed in the inner diameter portion 30a of the front cover 30 opposing the disc portion 45b and in the side of the outer diameter of the front cover 30 by a bolt 34a and a nut 34b welded to the front cover 30. Accordingly, since the torque converter 5 is deformed to be large in the center portion in the rotational direction and to be small in the side of the outer diameter of the front cover 30 as mentioned above, the rotor 43 mounted in the side of the outer diameter of the front cover is not largely affected by the deformation of the torque converter 5 in view of the support accuracy.

In this case, the lockup piston hub 33 is cylindrically formed as illustrated and arranged so as to surround the input shaft 10, and an oil seal is arranged between the lockup piston hub 33 and the input shaft 10.

Further, the rotor 43 is supported by the crank shaft 52 so as to freely move relatively as mentioned above, however, with respect to the axial direction, is restricted by the drive plate 55 and the input 51 constituting the flex plate so that a movement becomes a little.

Further, since the crank shaft 52 and the rotor shaft portion 45a are in contact only at the narrow protruding groove portion 46, the contact position is only changed even if the crank shaft 52 eccentrically rotates due to the explosive vibration of the engine 13, so that it is possible to reduce the transmission of the eccentric rotation in the side of the crank shaft 52 to the side of the rotor shaft portion 45a.

Further, the lockup clutch 3 mentioned above is housed and arranged in the inner diameter side of the middle portion 30b of the front cover 30. The lockup clutch 3 is provided with a drum 32 fixed to the inner diameter portion 30a of the front cover and extended in an axial direction along the middle portion 30b, a spline is formed on an inner peripheral surface of the drum 32 in an axial direction, a plurality of outer friction plates 37 are supported to the spline, and the outer friction plates 37 are prevented from coming off by a snap ring 39. Further, a piston plate 40 is arranged between the inner peripheral surface of the drum 32 and an outer peripheral surface of a lockup piston hub 33 so as to freely move in a close contact state. Further, a hub 20 is spline connected to the input shaft 10 in the vicinity of the lockup piston hub 33, a hub 35 is supported to the hub 20, and a damper spring 38 is interposed between both of the hubs so as to constitute a spring damper for absorbing impact rotation. Further, the hub 35 is extended to a position opposing the drum 32, and a plurality of inner friction plates 36 are spline connected to a surface opposing the drum 32. That is, a multi plate disc clutch is constructed by the outer friction plates 37 and the inner friction plates 36.

Further, an orifice hole, formed in the piston plate 40 mentioned above, can communicate between both of oil chambers partitioned by the piston plate 40 while throttling a hydraulic pressure between both of the oil chambers, changes a flow direction of the oil so as to move the piston plate 40, can control a pressing force applied to the outer friction plate 37 of the piston plate 40, and can control connection, release or slip between the friction plates 36 and 37.

In this case, the lockup clutch 3 is formed so as to have a diameter smaller than that of a truss constituted by the turbine runner 16 of the torque converter 5 and the outer shell of the pump impeller 17, and particularly arranged so that the drum 32 is positioned in a substantially center portion in a radial direction of the tourus.

Further, the lockup clutch 3 has a small diameter capable of being housed inside the motor generator 6, however, is structured such that even in the case that in the multi plate disc clutch, both of the motor generator 6 and the internal combustion engine 13 are driven, the driving force thereof can be reliably transmitted to the input shaft 10.

On the contrary, the turbine runner 16 is structured such as to be connected to the hub 20 mentioned above so as to integrally rotate with the input shaft 10.

Further, the pump impeller 17 is fixed to the outer diameter portion 30c of the front cover 30 as mentioned above, and the hub 17a is fixed to another base portion.

Further, a sleeve 27 is arranged between the hub 17a and the input shaft 10 so as to surround the input shaft 10, and an inner cage of a one-way clutch 26 is fixed to a front end portion of the sleeve 27. Then, the one-way clutch 26 is connected to the stator 19.

Further, on the contrary, an oil pump 22 is arranged between a left side of the torque converter 5 and the multi-stage speed change mechanism 2, and the hub 17a mentioned above is rotatably supported on an inner peripheral surface of a pump case 22a thereof via a bush 23. Accordingly, the disc portion 45b of the rotor 43 mentioned above is supported to the pump case 22a via the bolt 34a, the nut 34b, the front cover 30 and the hub 17a, however, it is possible to secure a wide span between two portions supporting the rotor 43 (that is, the support portion by the crank shaft 52 and the support portion by the pump case 22a). Accordingly, even in the case that the crank shaft 52 eccentrically rotates as mentioned above, an angle of deflection of the disc portion 45b in the rotor becomes small, so that it is possible to make a gap between the rotor 43 and the stator 42 small, and it is possible to increase an efficiency as the motor generator. In this case, an oil seal 25 is arranged between the pump case 22a and the hub 17a. Further, the sleeve 27 mentioned above is extended from the oil pump 22.

Fig. 3 shows a partly modified embodiment. In this case, the same reference numerals are attached to the same portions as those of the preceding embodiment and a description thereof will be omitted. The engine crank shaft 52 in accordance with the present embodiment is structured such that the hole portion (the concave portion) 52a deeper than that of the preceding embodiment is formed on the end surface thereof, and an outer periphery of the end portion is rotatably supported to an engine main body 13a via a bearing portion 60 such as a metal bearing or the like.

Further, a shaft portion of a rotor, that is, the shaft portion 45a formed in the center of rotation of the support plate 45 protrudes toward the engine side. The protruding portion of the shaft portion 45a is formed in a solid shape, and an annular protruding groove portion 46 is formed in an axially narrow area on the outer peripheral surface of the front end portion thereof. Further, the rotor shaft portion 45a longer than the preceding embodiment is inserted to the crank shaft hole portion 52a, and the protruding groove portion 46 is in contact with the inner surface of the hole portion 52a so as to form the support portion.

The protruding groove portion 46 in which the support portion, that is, the rotor shaft portion 45a is supported to the engine crank shaft 52, is arranged so that the bearing portion 60 of the crank shaft 52 and at least a part of the protruding groove portion 46 are overlapped with each other in the axial direction.

The support portion 46 by the crank shaft of the rotor shaft portion 45a is arranged near the bearing portion 60 of the crank shaft, whereby the influence given by an increase of mass of the rotor in the motor generator 6 is not applied to the crank shaft by being directly supported by the bearing portion 60 via the crank shaft, that is, the force applied to the engine crank shaft by supporting the rotor 43 is directly supported by the bearing portion 60, whereby the rotor gives a little influence to the crank shaft. Further, since the crank shaft portion supporting the rotor shaft portion is supported by the bearing portion 60, thereby not being oscillated, the eccentric rotation of the crank shaft 52 caused by the explosive vibration of the engine is not transmitted to the rotor 43.

In this case, in Fig. 3, reference numeral 61 denotes a shield plate for shielding a leakage flux from the motor generator 6. The shield plate 61 is fixed in contact with the stator iron core 42a at one end, axially extends in the opposite direction to the stator iron core on an axial outer peripheral surface of the stator coil 42b, and further extends to an axial inner peripheral side toward the side portion of the rotor 43 along the stator coil. Accordingly, with respect to the leakage flux from the stator coil 42b, a closed loop is formed along a path among the stator coil 42b, the shield plate 61 and the stator iron core 42a so as to prevent the leakage flux from flowing to the other members, thereby preventing the rotational position detecting sensor 47 from reducing a detecting accuracy and generating an erroneous operation due to the influence of the leakage flux.

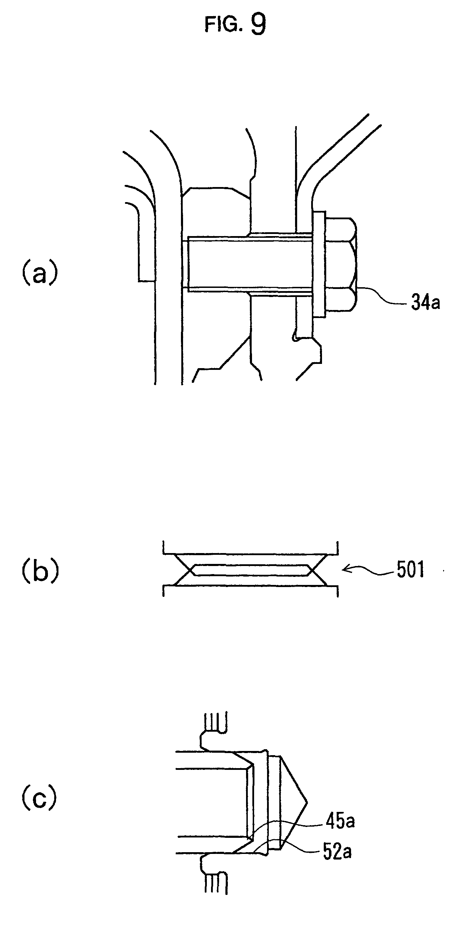

Figs. 4 to 8 are skeleton views showing variations of the rotor support aspects, and Fig. 9 is a view explaining definitions of reference symbols used in Figs. 4 to 8. That is, in Figs. 4 to 8, "■ (black square symbol)" denotes being drive connected and supported, and this means being fastened by a bolt or the like such as a bolt 34a (corresponding to Fig. 2) shown in Fig. 9(a). Further, "● (black circle symbol)" denotes only being drive connected, and this means that a driving force is transmitted by a spline 501 connected to a flexible member and transmitting the driving force as shown in Fig. 9(b). Further, "○ (outline circle symbol)" denotes only being supported, and this means only being supported and not transmitting a driving force such as the shaft portion 45a and the hole portion 52a (corresponding to Fig. 2) shown in Fig. 9(c). In this case, in Figs. 4 to 8, the member having the same reference numeral as that used in Figs. 1 and 2 shows the same member as the member having the reference numeral used in Figs. 1 and 2.

At first, Fig. 4 is a skeleton view of the embodiment shown in Figs. 1 and 2 mentioned above. As has been already described, the rotor 43 is supported by two elements constituted by the crank shaft 52 and the inner diameter portion 30a of the front cover in the torque converter. The gap C is provided between the middle portion 30b of the front cover and the rotor 43.

As shown in Fig. 5, it is possible to fix and support the rotor 43 to the inner diameter portion 30a (the input member) of the front cover in the torque converter. In this case, the gap C is also provided between the middle portion 30b of the front cover and the rotor 43.

As shown in Fig. 6, it is possible to support the rotor 43 to the crank shaft 52. The crank shaft 52 and the inner diameter portion 30a (the input member) of the torque converter are supported so as to freely move relatively and are connected so as to freely move in the axial direction. In this case, the gap C is also provided between the middle portion 30b of the front cover and the rotor 43.

As shown in Fig. 7, it is possible to support the rotor 43 by two elements constituted by the inner diameter portion 30a (the input member) of the front cover in the torque converter and the motor housing 15 (the case). The rotor 43 and the inner diameter portion 30a are integrally fixed, and the rotor 43 is rotatably supported to the motor housing 15 and connected to the crank shaft 52 of the engine 13 so as to freely move in the axial direction. In this case, the gap C is also provided between the middle portion 30b of the front cover and the rotor 43. In this case, reference numeral 90 in Fig. 6 denotes a flex plate.

As shown in Fig. 8, it is possible to support the rotor 43 by two elements constituted by the crank shaft 52 and the motor housing 15 (the case). The rotor 43 and the crank shaft 52 of the engine 13 are integrally fixed, and the rotor 43 is rotatably supported to the motor housing 15 and connected to the inner diameter portion 30a (the input member) of the front cover in the torque converter so as to freely move in the axial direction. In this case, the gap C is also provided between the middle portion 30b of the front cover and the rotor 43.

As mentioned above, the rotor 43 can be supported by either one of the inner diameter portion 30a of the front cover in the torque converter and the crank shaft 52 of the engine 13 or a combination of any two of the inner diameter portion 30a of the front cover in the torque converter, the motor housing 15 (the case) and the crank shaft 52 of the engine 13.

A description will be given below of an operation of the present drive apparatus 1 for the hybrid vehicle mentioned above.

Here, in the case that the vehicle is in a stop state, when a driver turns on an ignition switch (not shown) and depresses an accelerator pedal (at a time of a low throttle opening degree), an electric current is applied to the motor generator 6 from a battery (not shown) and the motor generator 6 functions as a motor. That is, when a controller (not shown) applies the electric current to the coil 42b of the stator 42 at a suitable timing on the basis of a signal (the position of the rotor 43) from the sensor 47, the rotor 43 rotates in a forward moving direction and at a high efficiency, and the rotational driving force is transmitted to the torque converter 5 via the support plate 45, the bolt 34a and the nut 34b, is increased on the basis of a predetermined torque ratio by the torque converter 5 and is thereafter transmitted to the input shaft 10.

When the vehicle starts, the fuel injection apparatus of the internal combustion engine 13 is not operated and the engine 13 is in a stop state, so that the vehicle starts in accordance only with the driving force from the motor generator 6. In this case, since the support plate 45 is rotated in the manner mentioned above, the crank shaft 52 is rotated via the input plate 51 and the drive plate 55, so that the piston oscillates while repeating compression and release of the air in the cylinder chamber. In this case, the motor generator 6 has a drive characteristic of outputting a high torque at a time of a low rotational number, and the vehicle smoothly starts and travels at a predetermined torque due to an increase of the torque ratio of the torque converter 5 and a high torque ratio generated by a first speed stage of the multi-stage speed change mechanism 2.

Further, even in the case that the speed immediately after the vehicle starts is comparatively low, when the accelerator pedal is depressed so as to accelerate and climb up, resulting in that the throttle is opened at a level equal to or more than a fixed opening degree, the fuel injection apparatus is operated, the motor generator 6 functions as a starter motor, the ignition plug is ignited and the internal combustion engine 13 is started. Accordingly, the crank shaft 52 is rotated, and the rotational driving force is transmitted to the support plate 45 via the drive plate 55 and the input plate 51. Then, both driving forces of the internal combustion engine 13 and the motor generator 6 functioning as the motor are added so as to be transmitted to the torque converter 5, and the vehicle is traveled by a large driving force. At this time, the multi-stage speed change mechanism 2 is shifted up, and the rotation at a desired rotational speed is transmitted to the driving wheel.

Then, in the case that the vehicle is in a normal high speed traveling state, the motor generator 6 is no-load driven (controls a motor output so as to offset the torque generated by a counter electromotive force generated in the motor), and the motor generator 6 is raced. Accordingly, the vehicle exclusively travels in accordance with the driving force only by the internal combustion engine 13.

Here, in the case that a state of charge (SOC) of the battery is small, the energy is regenerated by functioning the motor generator 6 as a generator. In the drive state by the internal combustion engine 13 or the drive state assisted by the motor in addition to the internal combustion engine 13 (in some cases, in the drive state only by the motor), the multi plate disc clutch (the outer friction plate 37 and the inner friction plate 36) are connected by changing to the direction of the converter pressure so as to move the piston plate 40. Accordingly, the torque transmitted to the front cover 30 is directly transmitted to the input shaft 10 via the drum 32, the outer friction plate 37, the inner friction plate 36, the hub 35, the damper spring 38 and the turbine hub 20 without passing through the oil flow of the torque converter.

Further, in the case that the output of the internal combustion engine 13 has room such as at a time of a normal low or middle speed travel or at a time of a travel on a descending road, the motor generator 6 is functioned as the generator so as to charge the battery, in accordance with the SOC of the battery. In particular, in the case that the engine brake is required at a time of the travel on the descending road, it is possible to obtain a sufficient engine brake effect by increasing a regenerating electric power of the motor generator 6 corresponding to the generator. Further, in the case that the driver depresses a foot brake pedal so as to reduce the speed of the vehicle, the regenerating electric power of the motor generator 6 is further increased, the motor generator 6 is operated as a regenerating brake, an inertia energy of the vehicle is regenerated as an electric power, and a brake force generated by the friction brake is reduced, whereby an energy consumption due to a heat radiation is reduced. Further, the motor generator 6 is made in a regenerating state so as to drive the engine in a high efficiency area even in the middle speed range, whereby it is possible to improve engine efficiency and it is possible to increase a motor travel on the basis of the electric charge of the battery due to the regeneration mentioned above, so that energy efficiency can be improved.

Then, in a state that the vehicle stops at a signal or the like, the motor generator 6 is stopped and the fuel injection apparatus is turned off, whereby the internal combustion engine is also stopped. That is, an idling state in the conventional engine is lost. Further, the vehicle is started from the stop state in the manner mentioned above, that is, at first the vehicle starts on the basis of the motor driving force of the motor generator 6, the engine is started by the motor driving force in the comparatively low speed state immediately thereafter, the vehicle is smoothly driven by being assisted by the driving force of the motor 6 without a rapid driving force change of the engine, and the motor generator 6 is used as the regenerating brake at a time when the engine brake is required and the vehicle is braked and stopped, so as to regenerate the vehicle inertia energy as the electric energy. Further, in the area having poor engine efficiency such as at a time low load or extremely low load of the engine, the vehicle is driven by the motor. Due to the combination of these, the present hybrid vehicle can save the specific fuel consumption and reduce the exhaust gas.

In this case, in the embodiment mentioned above, there is shown examples in which the present invention is applied to the FF type automatic transmission D₁. However, the structure is not limited to this, and the present invention may be applied to an automatic transmission of an FR type or an automatic transmission of a CVT type.

Next, a description will be given of effect of the present embodiment.

In accordance with the present embodiment, since the motor generator 6 constituted by the stator 42 and the rotor 43 is arranged in the outer diameter side of the torque converter 5 (accurately in the outer diameter side of the middle portion 30b of the front cover 30) and at the position axially overlapping with the torque converter 5, it is possible to reduce the axial dimension in comparison with the structure in which the motor generator and the torque converter are not overlapped with each other, and it is possible to make the apparatus compact.

Further, in accordance with the present embodiment, since the fixing member for rotatably supporting the rotor 43 is not required, it is possible to reduce the axial dimension of the apparatus and it is possible to make the apparatus compact.

On the contrary, in the internal combustion engine 13, since the piston is reciprocated due to the explosion within the cylinder chamber and the crank shaft 52 is rotated due to the reciprocation, the crank shaft 52 easily rotates eccentrically. However, since the crank shaft 52 and the rotor support plate 45 are connected via the input plate 51, the drive plate 55 and the like, the eccentric rotation mentioned is absorbed due to deflection of the plates 51 and 55. Further, in the shaft portion 45a of the rotor support plate 45, only the narrow annular protruding groove portion 46 is in contact with the crank shaft 52. Accordingly, it is possible to reduce the transmission of the explosive vibration of the internal combustion engine 13 to the rotor support plate 45 due to a synergetic effect of them, accordingly it is possible to reduce the gap between the rotor 43 and the stator 42, and it is possible to increase efficiency of the motor generator.

In particular, as shown in Fig. 3, when the portion 46 in which the rotor shaft portion 45a is supported by the engine crank shaft 52 is arranged so as to be overlapped with the bearing portion 60 supporting the crank shaft, it is also possible to directly support the force applied to the crank shaft due to supporting the rotor by the bearing portion 60. It is also possible to reduce the influence which the rotor gives to the crank shaft. Further, since the portion supporting the rotor shaft portion in the crank shaft is directly supported by the bearing portion so as not to be oscillated, the eccentric rotation of the crank shaft is not transmitted to the rotor, it is possible to improve the support accuracy of the rotor and it is possible to further reliably increase efficiency of the motor generator obtained by the reduction of the air gap.

Further, on the contrary, the disc portion 45b of the rotor 43 is fixed to the inner diameter portion 30a of the front cover 30 opposing the disc portion 45b and in the outer diameter side of the front cover 30. Further, the rotor 43 is centered by the axially movable center piece 31. Accordingly, even if the front cover 30 is deformed by hydraulic pressure supplied to the converter chamber B, due to the synergetic effect, it is possible to prevent the centering accuracy of the rotor 43 from being deteriorated.

Further, since the gap C exists between the middle portion 30b of the torque converter 5 and the holding portion 45c of the rotor 43, and the rotor 43 is supported by the other than the middle portion 30b of the torque converter 5, the position of the rotor 43 does not move even if the torque converter 5 is deformed by the centrifugal hydraulic pressure or the like. Accordingly, there is not generated a disadvantage that the rotor 43 moves in the diametrical direction so as to be interfered with the stator 42. Further, since there is not generated an interference between the rotor 43 and the stator 42, it is not necessary to secure the interval between the stator 42 and the rotor 43 to be larger, and thus efficiency of the motor is not reduced. Further, the heat output from the torque converter 5 is not easily transmitted to the rotor 43 and a function of the magnet is not deteriorated. Further, since the positions of the lockup clutch 3 and the rotor 43 are moved apart from each other by the gap c, the dusts such as the iron powders or the like are not stored in the lockup clutch 3 due to the magnetic flux generated from the magnet, and the operation of the lockup clutch 3 is not prevented.

In this case, the dimension of the gap C mentioned above is sufficient to be between 0.8 and 3.5 mm, and particularly is 2 mm. The diametrical displacement of the middle portion 30b of the torque converter 5 is about 0.5 to 1 mm, however, the above value is set by taking the influence of the magnetic flux from the rotor 43 into consideration.

On the contrary, in accordance with the present embodiment, hydraulic pressure (that is, the charge pressure or the centrifugal hydraulic pressure) is applied to the converter chamber B formed by the front cover 30 and the outer shell of the pump impeller 17, however, the front cover 30 has the step-like middle portion 30b extending in the axial direction as mentioned above and has a strongly-built structure, thereby not being easily deformed.

Further, in accordance with the present embodiment, since the sensor 47 detecting the phase of the rotor 43 is arranged in the outer diameter side of the motor generator 6 so as to detect the extended portion of the flex plate, it is sufficient that the sensor 47 is directly supported by the front end portion of the fixing member such as the motor housing or the like, and it is unnecessary to arrange the fixing member for supporting the sensor 47 along the flex plate or the rotor 43, so that it is possible to reduce the axial dimension of the apparatus. Further, by detecting the phase of the rotor 43 of the motor generator 6 with using the flex plate, it is possible to detect the phase without providing with a new member for being detected.

### INDUSTRIAL APPLICABILITY

As mentioned above, the drive apparatus for the hybrid vehicle in accordance with the present invention is useful for the drive apparatus for the hybrid vehicle such as the passenger car, the truck, the bus or the like, and is particularly suitable for being used as the drive apparatus in an automobile for which a compact size is required.

## Claims

1. A drive apparatus (1) for a hybrid vehicle comprising:
an engine (13);
a motor (6) constituted by a stator (42) and a rotor (43);
an automatic transmission (D1) having a fluid transmitting apparatus (5); and
a case (15) for receiving said motor (6); and
a driving force output from said engine (13) and said motor (6) being transmitted to an input member (10) of said fluid transmitting apparatus (5),
wherein said motor (6) is arranged in a side of an outer diameter of said fluid transmitting apparatus (5) at a position at which at least a part of said motor (6) is overlapped with said fluid transmitting apparatus (5) in an axial direction, with a predetermined gap (6) between said rotor (43) and said fluid transmitting apparatus (5), and
said rotor (43) is supported by one of said fluid transmitting apparatus (5) and an output shaft (52) of said engine (13) or a combination of any two among said fluid transmitting apparatus (5), said case (15) and the output shaft (52) of said engine (13) **characterized in that** said fluid transmission apparatus (5) has a lockup clutch (3) for connecting said input member (10) to said turbine (16) and said rotor (43) is arranged in a side of an outer side of said lockup clutch (3) with said predetermine gap (c).

2. The drive apparatus (2) for a hybrid vehicle according to claim 1, **characterized in that** said rotor (43) is supported by the output shaft (52) of said engine (13) and an input member (10) of said fluid transmitting apparatus (5).

3. The drive apparatus (1) for a hybrid vehicle according to claim 1, **characterized in that** said rotor (43) is fixed to and supported only by the input member (10) of said fluid transmitting apparatus (5).

4. The drive apparatus (1) for a hybrid vehicle according to claim 1, **characterized in that** said rotor (43) is fixed to and supported by the output shaft (52) of said engine (13).

5. The drive apparatus (1) for a hybrid vehicle according to claim 1, **characterized in that** said rotor (43) is supported by said case (15) and the input member (10) of said fluid transmitting apparatus (5).

6. The drive apparatus (1) for a hybrid vehicle according to claim 1, **characterized in that** said rotor (43) is supported by said case (15) and the output shaft (32) of said engine.

7. The drive apparatus (1) for a hybrid vehicle according to claim 2, **characterized in that** said rotor (43) has a shaft portion at a center of rotation thereof, and the shaft portion of said rotor (43) is in contact with an output shaft of said engine in an axially narrow area, thereby being supported by said output shaft in such a manner as to freely move relatively.

8. The drive apparatus (1) for a hybrid vehicle according to claim 7, **characterized in that** a concave portion is formed on an end surface of the output shaft of said engine (13),
an annular protruding groove portion is formed in an axially narrow area on an outer peripheral surface of the shaft portion of the rotor, and
a shaft portion of said rotor (43) is inserted to said concave portion and said protruding groove portion is in contact with said output shaft, thereby being supported by said output shaft.

9. The drive apparatus (1) for a hybrid vehicle according to any of claims 2, 7 or 8, **characterized in that** said fluid transmitting apparatus (5) has a front cover (30) covering a turbine runner (16) and serving as said input member connected to a pump impeller (17), and
said rotor (43) is supported in a portion opposing said rotor in said front cover and in a side of an outer diameter of said cover.

10. The drive apparatus (1) for a hybrid vehicle according to claim 9, **characterized in that** said fluid transmitting apparatus (5) has a center piece at a center of rotation thereof, and
said rotor (43) is centered by said center piece.

11. The drive apparatus (1) for a hybrid vehicle according to any of claims 2, 7, 8, 9 or 10, **characterized in that** a flex plate for transmitting a driving force is provided between the output shaft of said engine (13) and said rotor (43),
a part of said flex plate is extended out to a side of an outer diameter of the stator (42) in said motor (6), and
a sensor for detecting a phase of the rotor (43) in said motor (6) is arranged in the side of the outer diameter of said motor (6) so as to detect the extended portion of said flex plate.

12. The drive apparatus (1) for a hybrid vehicle according to claim 2, 7, 8, 9, 10 or 11, **characterized in that** an end portion of an output shaft of said engine (13) is rotatably supported by a bearing portion and a concave portion is formed on an end surface of said output shaft,
said rotor (43) has a shaft portion in a center of rotation thereof and said shaft portion is inserted to said concave portion so as to be supported to said output shaft, and
a portion to which the shaft portion of said rotor (47) is supported is arranged so that at least a part of the portion is overlapped with said bearing portion.

13. The drive apparatus (1) for a hybrid vehicle according to claim 3, **characterized in that** said engine output shaft (52) and the input member (10) of said fluid transmitting apparatus (5) are supported so as to freely move relatively and connected so as to freely move in an axial direction.

14. The drive apparatus (1) for a hybrid vehicle according to claim 4, **characterized in that** said engine output shaft (52) and the input member (10) of said fluid transmitting apparatus (5) are supported so as to member of said fluid transmitting apparatus are supported so as to freely move relatively and connected so as to freely move in an axial direction.

15. The drive apparatus (1) for a hybrid vehicle according to claim 5, **characterized in that** said rotor (43) and the input member (10) of said fluid transmitting apparatus (5) are integrally fixed so as to be rotatably supported to said case (15) and connected to the output shaft (52) of said engine (13) so as to freely move in an axial direction.

16. The drive apparatus (1) for a hybrid vehicle according to claim 6, **characterized in that** said rotor (43) and the output shaft (52) of said engine (13) are integrally fixed so as to be rotatably supported to said case (15) and connected to the input member (16) of said fluid transmitting apparatus (5) so as to freely move in an axial direction.

17. The drive apparatus (1) for a hybrid vehicle according to any of claims 1 to 16, **characterized in that** said fluid transmitting apparatus (5) has a front cover (30) covering a turbine runner (16) and serving as said input member connected to a pump impeller (17), and
said front cover (30) has a flat portion (30b) extending in an axial direction and said rotor (43) is arranged in a side of an outer side of said flat portion (30b) with said predetermined gap (c).

18. The drive apparatus (1) for a hybrid vehicle according to any of claims 1 to 17, **characterized in that** said predetermined gap (c) is within a range between 0.8 and 3.5 mm.

19. The drive apparatus (1) for a hybrid vehicle according to claim 17, **characterized in that** said fluid transmission apparatus (5) is constituted by a multi-disc clutch and has a lockup clutch (3) for connecting said input member to said turbine, and
said lockup clutch (3) is arranged in a side of an inner diameter of said flat portion (30b) in said front cover (30).

## Patentansprüche

1. Antriebsvorrichtung (1) für ein Hybridfahrzeug, mit:
einem Verbrennungsmotor (13);
einem durch einen Stator (42) und einen Rotor (43) gebildeten Elektromotor (6);
einem Automatikgetriebe (Dl) mit einer Fluidübertragungsvorrichtung (5); und
einem Gehäuse (15) zum Aufnehmen des Elektromotors (6); und
wobei eine vom Verbrennungsmotor (13) und vom Elektromotor (6) ausgegebene Antriebskraft zu einem Eingangselement (10) der Fluidübertragungsvorrichtung (5) übertragen wird;
wobei der Elektromotor (6) an einer Außendurchmesserseite der Fluidübertragungsvorrichtung (5) an einer Position angeordnet ist, an der mindestens ein Teil des Elektromotors (6) die Fluidübertragungsvorrichtung (5) in einer axialen Richtung überlappt, wobei zwischen dem Rotor (43) und der Fluidübertragungsvorrichtung (5) ein vorgegebener Zwischenraum (C) vorhanden ist; und
der Rotor (43) durch die Fluidübertragungsvorrichtung (5) und eine Abtriebswelle (52) des Verbrennungsmotors (13) oder durch eine Kombination aus zwei beliebigen Komponenten unter der Fluidübertragungsvorrichtung (5), dem Gehäuse (15) und der Abtriebswelle (52) des Verbrennungsmotors (13) gehalten wird;
**dadurch gekennzeichnet, daß**
die Fluidübertragungsvorrichtung (5) eine Überbrückungskupplung (3) zum Verbinden des Eingangselements (10) mit der Turbine (16) aufweist und der Rotor (43) mit dem vorgegebenen Zwischenraum (C) an einer Seite einer Außenseite der Überbrückungskupplung (3) angeordnet ist.

2. Antriebsvorrichtung (1) nach Anspruch 1, **dadurch gekennzeichnet, daß** der Rotor (43) durch die Abtriebswelle (52) des Verbrennungsmotors (13) und ein Eingangselement (10) der Fluidübertragungsvorrichtung (5) gehalten wird.

3. Antriebsvorrichtung (1) nach Anspruch 1, **dadurch gekennzeichnet, daß** der Rotor (43) nur durch das Eingangselement (10) der Fluidübertragungsvorrichtung (5) fixiert und gehalten wird.

4. Antriebsvorrichtung (1) nach Anspruch 1, **dadurch gekennzeichnet, daß** der Rotor (43) durch die Abtriebswelle (52) des Verbrennungsmotors (13) fixiert und gehalten wird.

5. Antriebsvorrichtung (1) nach Anspruch 1, **dadurch gekennzeichnet, daß** der Rotor (43) durch das Gehäuse (15) und das Eingangselement (10) der Fluidübertragungsvorrichtung (5) gehalten wird.

6. Antriebsvorrichtung (1) nach Anspruch 1, **dadurch gekennzeichnet, daß** der Rotor (43) durch das Gehäuse (15) und die Abtriebswelle (52) des Verbrennungsmotors gehalten wird.

7. Antriebsvorrichtung (1) nach Anspruch 2, **dadurch gekennzeichnet, daß** der Rotor (43) einen wellenabschnitt in einem Drehungsmittelpunkt davon aufweist, wobei der Wellenabschnitt des Rotors (43) mit einer Abtriebswelle des Verbrennungsmotors in einem axial schmalen Bereich in Kontakt steht und daher durch die Abtriebswelle derart gehalten wird, daß er relativ dazu frei beweglich ist.

8. Antriebsvorrichtung (1) nach Anspruch 7,
**dadurch gekennzeichnet, daß**
ein konkaver Abschnitt an einer Endfläche der Abtriebswelle des Verbrennungsmotors (13) ausgebildet ist;
ein ringförmiger hervorstehender Nutenabschnitt in einem axial schmalen Bereich auf einer Außenumfangsfläche des Wellenabschnitts des Rotors ausgebildet ist; und
ein Wellenabschnitt des Rotors (43) in den konkaven Abschnitt eingesetzt ist und der hervorstehende Nutenabschnitt mit der Abtriebswelle in Kontakt steht und daher durch die Abtriebswelle gehalten wird.

9. Antriebsvorrichtung (1) nach einem der Ansprüche 2, 7 oder 8,
**dadurch gekennzeichnet, daß**
die Fluidübertragungsvorrichtung (5) eine vordere Abdeckung (30) aufweist, die ein Turbinenlaufrad (16) abdeckt und als das mit einem Pumpenflügelrad (17) verbundene Eingangselement dient; und
der Rotor (43) in einem dem Rotor in der vorderen Abdeckung gegenüberliegenden Abschnitt und an einer Außendurchmesserseite der Abdeckung gehalten wird.

10. Antriebsvorrichtung (1) nach Anspruch 9,
**dadurch gekennzeichnet, daß**
die Fluidübertragungsvorrichtung (5) ein Mittelstück an einem Drehungsmittelpunkt davon aufweist; und
der Rotor (43) durch das Mittelstück zentriert wird.

11. Antriebsvorrichtung (1) nach einem der Ansprüche 2, 7, 8, 9 oder 10,
**dadurch gekennzeichnet, daß**
eine biegsame Platte zum Übertragen einer Antriebskraft zwischen der Abtriebswelle des Verbrennungsmotors (13) und dem Rotor (43) angeordnet ist;
ein Teil der biegsamen Platte sich als Erweiterungsabschnitt zu einer Außendurchmesserseite des Stators (42) des Elektromotors (6) nach außen erstreckt; und
ein Sensor zum Erfassen einer Phase des Rotors (43) des Elektromotors (6) an der Außendurchmesserseite des Elektromotors (6) angeordnet ist, um den Erweiterungsabschnitt der biegsamen Platte zu erfassen.

12. Antriebsvorrichtung (1) nach Anspruch 2, 7, 8, 9, 10 oder 11,
**dadurch gekennzeichnet, daß**
ein Endabschnitt einer Abtriebswelle des Verbrennungsmotors (13) durch einen Lagerabschnitt drehbar gehalten wird und ein konkaver Abschnitt auf einer Endfläche der Abtriebswelle ausgebildet ist;
der Rotor (43) einen Wellenabschnitt in einem Drehungsmittelpunkt davon aufweist und der Wellenabschnitt in den konkaven Abschnitt eingesetzt ist, so daß er durch die Abtriebswelle gehalten wird; und
ein Abschnitt, an dem der Wellenabschnitt des Rotors (43) gehalten wird, derart angeordnet ist, daß mindestens ein Teil des Abschnitts den Lagerabschnitt überlappt.

13. Antriebsvorrichtung (1) nach Anspruch 3, **dadurch gekennzeichnet, daß** die Abtriebswelle (52) des Verbrennungsmotors und das Eingangselement (10) der Fluidübertragungsvorrichtung (5) derart gehalten werden, daß sie relativ zueinander frei beweglich sind, und so verbunden sind, daß sie in einer axialen Richtung frei beweglich sind.

14. Antriebsvorrichtung (1) nach Anspruch 4, **dadurch gekennzeichnet, daß** die Abtriebswelle (52) des Verbrennungsmotors und das Eingangselement (10) der Fluidübertragungsvorrichtung (5) derart gehalten werden, daß sie relativ zueinander frei beweglich sind, und so verbunden sind, daß sie in einer axialen Richtung frei beweglich sind.

15. Antriebsvorrichtung (1) nach Anspruch 5, **dadurch gekennzeichnet, daß** der Rotor (43) und das Eingangselement (10) der Fluidübertragungsvorrichtung (5) derart integral befestigt sind, daß sie durch das Gehäuse (15) drehbar gehalten werden, und mit der Abtriebswelle (52) des Verbrennungsmotors (13) derart verbunden sind, daß sie in einer axialen Richtung frei beweglich sind.

16. Antriebsvorrichtung (1) nach Anspruch 6, **dadurch gekennzeichnet, daß** der Rotor (43) und die Abtriebswelle (52) des Verbrennungsmotors (13) derart integral befestigt sind, daß sie durch das Gehäuse (15) drehbar gehalten werden, und mit dem Eingangselement (10) der Fluidübertragungsvorrichtung (5) derart verbunden sind, daß sie in einer axialen Richtung frei beweglich sind.

17. Antriebsvorrichtung (1) nach einem der Ansprüche 1 bis 16,
**dadurch gekennzeichnet, daß**
die Fluidübertragungsvorrichtung (5) eine vordere Abdeckung (30) aufweist, die ein Turbinenlaufrad (16) abdeckt und als mit einem Pumpenflügelrad (17) verbundenes Eingangselement dient; und
die vordere Abdeckung (30) einen sich in eine axiale Richtung erstreckenden flachen Abschnitt (30b) aufweist, und der Rotor (43) mit einem vorgegebenen Zwischenraum (C) an einer Außenseite des flachen Abschnitts (30b) angeordnet ist.

18. Antriebsvorrichtung (1) nach einem der Ansprüche 1 bis 17, **dadurch gekennzeichnet, daß** der vorgegebene Zwischenraum (C) zwischen 0,8 und 3,5 mm beträgt.

19. Antriebsvorrichtung (1) nach Anspruch 17,
**dadurch gekennzeichnet, daß** die Fluidübertragungsvorrichtung (5) durch eine Mehrscheibenkupplung gebildet wird und eine Überbrückungskupplung (3) zum Verbinden des Eingangselements mit der Turbine aufweist; und
die Überbrückungskupplung (3) an einer Seite einer Innendurchmesserseite des flachen Abschnitts (30b) in der vorderen Abdeckung (30) angeordnet ist.

## Revendications

1. Un dispositif d'entraînement (1) pour un véhicule hybride, comprenant :
un moteur thermique (13) ;
un moteur électrique (6) formé par un stator (42) et un rotor (43) ;
une transmission automatique (D1) comprenant un dispositif à transmission hydraulique (5) ; et
un carter (15) pour loger ledit moteur électrique (6) ; et
une sortie de force d'entraînement venant dudit moteur thermique (13) et dudit moteur électrique (6) étant transmise à un organe d'entrée (10) dudit dispositif de transmission hydraulique (5) ;
dans lequel ledit moteur électrique (6) est agencé sur un côté d'un diamètre extérieur dudit dispositif de transmission hydraulique (5) en une position à laquelle au moins une partie dudit moteur électrique (6) est en chevauchement avec ledit dispositif de transmission hydraulique (5) en direction axiale, avec un intervalle (C) prédéterminé entre ledit rotor (43) et ledit dispositif de transmission hydraulique (5), et
ledit rotor (43) est supporté par l'un parmi ledit dispositif de transmission hydraulique (5) et un arbre de sortie (52) dudit moteur thermique (13) ou une combinaison de deux quelconques parmi ledit dispositif de transmission hydraulique (5), ledit carter (15) et l'arbre de sortie (52) dudit moteur thermique (13),
**caractérisé en ce que** ledit dispositif de transmission hydraulique (5) comprend un embrayage de la prise directe (3) pour relier ledit organe d'entrée (10) à ladite turbine (16) et ledit rotor (43) est agencé sur un côté extérieur dudit embrayage de la prise directe (3), avec ledit intervalle (C) prédéterminé.

2. Le dispositif d'entraînement (1) pour un véhicule hybride selon la revendication 1, **caractérisé en ce que** ledit rotor (43) est supporté par l'arbre de sortie (52) dudit moteur thermique (13) et un organe d'entrée (10) dudit dispositif de transmission hydraulique (5).

3. Le dispositif d'entraînement (1) pour un véhicule hybride selon la revendication 1, **caractérisé en ce que** ledit rotor (43) est fixé à et supporté uniquement par l'organe d'entrée (10) dudit dispositif de transmission hydraulique (5).

4. Le dispositif d'entraînement (1) pour un véhicule hybride selon la revendication 1, **caractérisé en ce que** ledit rotor (43) est fixé à et supporté par l'arbre de sortie (52) dudit moteur thermique (13).

5. Le dispositif d'entraînement (1) pour un véhicule hybride selon la revendication 1, **caractérisé en ce que** ledit rotor (43) est supporté par ledit carter (15) et ledit organe d'entrée (10) dudit dispositif de transmission hydraulique (5).

6. Le dispositif d'entraînement (1) pour un véhicule hybride selon la revendication 1, **caractérisé en ce que** ledit rotor (43) est supporté par ledit carter (15) et ledit arbre de sortie (52) dudit moteur thermique.

7. Le dispositif d'entraînement (1) pour un véhicule hybride selon la revendication 2, **caractérisé en ce que** ledit rotor (43) comprend une partie d'arbre en un centre de rotation de celui-ci, et la partie d'arbre dudit rotor (43) est en contact avec un arbre de sortie dudit moteur thermique dans une zone axialement étroite, étant de cette manière supportée par ledit arbre de sortie de manière à permettre un déplacement relatif libre.

8. Le dispositif d'entraînement (1) pour un véhicule hybride selon la revendication 7, **caractérisé en ce qu'**une partie concave est formée sur une surface d'extrémité de l'arbre de sortie dudit moteur thermique (13),
une partie de gorge annulaire en saillie est formée dans une zone axialement étroite sur une surface périphérique extérieure de la partie d'arbre du rotor, et
une partie d'arbre dudit rotor (43) est insérée sur ladite partie concave et ladite partie de gorge en saillie est en contact avec ledit arbre de sortie de manière à être supportée par ledit arbre de sortie.

9. Le dispositif d'entraînement (1) pour un véhicule hybride selon l'une quelconque des revendications 2, 7 ou 8, **caractérisé en ce que** ledit dispositif de transmission hydraulique (5) présente un couvercle avant (30), couvrant un équipage mobile de turbine (16) et servant dedit organe d'entrée connecté à un impulseur de pompe (17) ; et
ledit rotor (43) est supporté en une partie opposée audit rotor dans ledit couvercle avant et en un côté d'un diamètre extérieur dudit couvercle.

10. Le dispositif d'entraînement (1) pour un véhicule hybride selon la revendication 9, **caractérisé en ce que** ledit dispositif de transmission hydraulique (5) présente une pièce centrale à son centre de rotation, et
ledit rotor (43) est centré par ladite pièce centrale.

11. Le dispositif d'entraînement (1) pour un véhicule hybride selon l'une quelconque des revendications 2, 7, 8, 9 ou 10, **caractérisé en ce qu'**une plaque flexible, devant transmettre une force d'entraînement, est prévue entre l'arbre de sortie dudit moteur thermique (13) et ledit rotor (43) ;
une partie de ladite plaque flexible est étendue extérieurement sur un côté d'un diamètre extérieur du stator (42) dans ledit moteur électrique (6), et
un capteur devant détecter une phase du rotor (43) dans ledit moteur électrique (6) est agencé dans le côté du diamètre extérieur dudit moteur électrique (6) pour détecter la partie étendue de ladite plaque flexible.

12. Le dispositif d'entraînement (1) pour un véhicule hybride selon les revendications 2, 7, 8, 9, 10 ou 11, **caractérisé en ce qu'**une partie d'extrémité d'un arbre de sortie dudit moteur thermique (13) est supportée à rotation par une partie formant palier et une partie concave est formée sur une surface d'extrémité dudit arbre de sortie,
ledit rotor (43) comprend une partie d'arbre en un centre de rotation de celui-ci et ladite partie d'arbre est insérée dans ladite partie concave pour être supportée sur ledit arbre de sortie, et
une partie, sur laquelle la partie d'arbre dudit rotor (43) est supportée, est agencée de manière qu'au moins une partie de la partie soit en chevauchement avec ladite partie formant palier.

13. Le dispositif d'entraînement (1) pour un véhicule hybride selon la revendication 3, **caractérisé en ce que** ledit arbre de sortie (52) de moteur thermique et ledit organe d'entrée (10) dudit dispositif de transmission hydraulique (5) sont supportés pour permettre un déplacement relatif libre et sont connectés pour se déplacer librement en direction axiale.

14. Le dispositif d'entraînement (1) pour un véhicule hybride selon la revendication 4, **caractérisé en ce que** ledit arbre de sortie (52) de moteur thermique et ledit organe d'entrée (10) dudit dispositif de transmission hydraulique (5) sont supportés pour permettre un mouvement relatif libre et connectés pour se déplacer librement en direction axiale.

15. Le dispositif d'entraînement (1) pour un véhicule hybride selon la revendication 5, **caractérisé en ce que** ledit rotor (43) et ledit organe d'entrée (10) dudit dispositif de transmission hydraulique (5) sont solidaires pour être supportés à rotation sur ledit carter (15) et connectés à l'arbre de sortie (52) dudit moteur thermique (13) pour se déplacer librement en direction axiale.

16. Le dispositif d'entraînement (1) pour un véhicule hybride selon la revendication 6, **caractérisé en ce que** ledit rotor (43) et ledit arbre de sortie (52) dudit moteur thermique (13) sont solidaires, pour être supportés à rotation sur ledit carter (15) et reliés à l'organe d'entrée (10) dudit dispositif de transmission hydraulique (5), pour pouvoir se déplacer librement en une direction axiale.

17. Le dispositif d'entraînement (1) pour un véhicule hybride selon l'une quelconque des revendications 1 à 16, **caractérisé en ce que** ledit dispositif de transmission hydraulique (5) présente un couvercle avant (30), couvrant un équipage mobile de turbine (16) et servant dedit organe d'entrée connecté à un impulseur de pompe (17), et
ledit couvercle avant (30) présente une partie plate (30b) s'étendant en une direction axiale et ledit rotor (43) est agencé en un côté d'un côté extérieur de ladite partie plate (30b) avec ledit intervalle (C) prédéterminé.

18. Le dispositif d'entraînement (1) pour un véhicule hybride selon l'une quelconque des revendications 1 à 17, **caractérisé en ce que** ledit intervalle (C) prédéterminé est dans la plage comprise entre 0,8 et 3,5 mm.

19. Le dispositif d'entraînement (1) pour un véhicule hybride selon la revendication 17, **caractérisé en ce que** ledit dispositif de transmission hydraulique (5) est constitué par un embrayage multi-disque et comprend un embrayage pour la prise directe (3), pour connecter ledit organe d'entrée à ladite turbine, et
ledit embrayage de la prise directe (3) est agencé sur un côté d'un diamètre intérieur de ladite partie plate (30b), dans ledit couvercle avant (30).
